(19) Europäisches Patentamt / European Patent Office / Office européen des brevets

(11) **EP 3 252 339 B1**

(12) **FASCICULE DE BREVET EUROPEEN**

(45) Date de publication et mention de la délivrance du brevet:
**24.10.2018 Bulletin 2018/43**

(51) Int Cl.:
*G01P 15/08* (2006.01)  *G01P 1/00* (2006.01)
*B64C 27/00* (2006.01)  *F16F 7/10* (2006.01)
*F16F 15/03* (2006.01)

(21) Numéro de dépôt: **17171691.3**

(22) Date de dépôt: **18.05.2017**

(54) **RESONATEUR, ET AERONEF MUNI DE CE RESONATEUR**

RESONATOR UND MIT EINEM SOLCHEN RESONATOR AUSGESTATTETES LUFTFAHRZEUG

A RESONATOR, AND AN AIRCRAFT FITTED WITH THE RESONATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.06.2016 FR 1600893**

(43) Date de publication de la demande:
**06.12.2017 Bulletin 2017/49**

(73) Titulaire: **Airbus Helicopters**
**13725 Marignane Cedex (FR)**

(72) Inventeurs:
• **INQUIETE, Guillaume**
  **13100 AIX EN PROVENCE (FR)**
• **CRANGA, Paul**
  **13004 MARSEILLE (FR)**
• **CHESNE, Simon**
  **69003 LYON (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 2 845 799      EP-A2- 2 039 957**
**US-A1- 2009 020 381**

**Description**

La présente invention concerne un résonateur et un aéronef muni de ce résonateur.

La présente invention relève des mécanismes visant à réduire un niveau vibratoire. En particulier, la présente invention relève des mécanismes visant à réduire des vibrations induites par des instabilités aéroélastiques résultant d'un couplage entre les modes de vibrations d'une structure porteuse d'un aéronef et les modes de vibrations d'un rotor de cet aéronef. Un tel mécanisme peut éventuellement être utilisé pour traiter les excitations d'une poutre de queue d'hélicoptère, et notamment pour traiter le phénomène connu sous l'expression anglaise « tail shake ». L'invention a pour objet un tel mécanisme et un aéronef muni d'un tel mécanisme.

Parmi les aéronefs, les giravions sont munis d'au moins un rotor principal lié à une cellule. Ce rotor principal participe au moins partiellement à la sustentation voire à la propulsion de l'aéronef.

Par ailleurs, des moteurs aptes à entraîner en rotation le rotor principal sont agencés dans la cellule. Dès lors, la cellule comporte une structure de montage du rotor permettant de fixer le rotor principal à cette cellule.

Une telle structure de montage comporte usuellement une boîte de transmission de puissance. La boîte transmission de puissance est mise en mouvement par les moteurs de l'aéronef. De plus, la boîte transmission de puissance est munie d'un mât rotor entraînant en rotation le rotor principal.

De plus, la structure de montage inclut des éléments de fixation fixant la boîte de transmission puissance à un plancher de la cellule. Par exemple, une structure de montage d'un giravion, appelée « pylône » par l'homme du métier en langue française et « pylon » en langue anglaise, comprend une boîte de transmission principale de puissance et des barres de suspension.

La cellule et le rotor principal sont chacun soumis à des excitations forcées inhérentes à la vitesse d'avancement de l'aéronef. Par exemple, la poutre de queue d'une cellule d'hélicoptère peut être excitée directement par un flux d'air turbulent provenant du rotor principal.

Outre les excitations forcées, un autre phénomène vibratoire peut être à l'origine de problèmes vibratoires sur un aéronef.

Un tel problème réside dans l'atténuation des phénomènes vibratoires induits par les instabilités aéroélastiques que subit un aéronef en vol. Par exemple, de telles instabilités aéroélastiques peuvent résulter du couplage provoqué entre les modes de vibration de la structure porteuse par les effets aérodynamiques dus au flux d'air en mouvement autour de cette structure porteuse, à savoir notamment une structure de type voilure fixe ou voilure tournante. Ces instabilités sont connues par l'homme du métier notamment sous le terme général « flottement » ou « flutter » en langue anglaise.

D'autres instabilités aéroélastiques correspondent par exemple aux instabilités dénommées « whirl flutter » en langue anglaise désignant une instabilité qui apparaît pour les systèmes tournants placés dans un flux d'air. Une telle instabilité peut résulter par exemple du couplage des modes de vibrations d'un rotor équipé de pales ou d'aubes avec des modes de vibrations de la structure porteuse supportant le rotor.

Ces phénomènes de « flutter » et de « whirl flutter » se caractérisent par des vibrations à cycle limite ou des vibrations divergentes pouvant conduire à des ruptures de pièces mécaniques ou d'éléments structuraux.

Ces instabilités sont généralement évitées par un choix convenable des caractéristiques modales du rotor et/ou de la structure porteuse Une instabilité apparaissant sur un aéronef existant nécessite alors des modifications structurales du rotor et/ou de la structure porteuse pouvant être importantes.

Les giravions sont globalement structurés pour pallier les conséquences de telles vibrations.

A cet effet, le rotor ou la cellule peuvent être équipés de systèmes antivibratoires, dénommés parfois résonateur, qui permettent de minimiser le niveau vibratoire.

Un résonateur a pour fonction de générer localement des vibrations dont les effets contrecarrent les vibrations gênantes d'une structure porteuse.

Ainsi, un résonateur comporte classiquement un organe dénommé « masse sismique » ou « masse battante » relié à un support par un moyen de mobilité. Le moyen de mobilité laisse une liberté de mouvement à la masse sismique. Le mouvement de la masse sismique est alors couplé au mouvement de la structure porteuse pour contrer l'excitation exercée sur cette structure porteuse.

En particulier, le couplage du mouvement de la masse sismique et du mouvement de la structure porteuse peut être réalisé en utilisant un résonateur passif à raideur prépondérante. Le moyen de mobilité d'un tel résonateur présente alors une raideur prépondérante au regard d'autres caractéristiques, et en particulier au regard de l'amortissement généré par ce moyen de mobilité. Cet amortissement est considéré comme étant négligeable dans le cadre d'un résonateur passif à raideur prépondérante.

Un résonateur passif à raideur prépondérante connu comporte alors une masse sismique reliée à une structure porteuse par une liaison souple de type lame.

Lorsque la structure porteuse est excitée selon une direction sensiblement orthogonale à la lame, la masse sismique effectue un mouvement de balancier.

Ce résonateur passif à raideur prépondérante a pour effet « d'étouffer » les vibrations à l'origine du mouvement de la structure porteuse en créant une antirésonance à une fréquence d'antirésonance donnée de réglage. En revanche, le résonateur passif à raideur prépondérante génère deux nouveaux modes de vibration dont les deux fréquences respectives de résonance sont situées de part et d'autre de la fréquence d'antirésonance. La plage de fréquence s'étendant entre ces deux modes de vibration reste relativement étroite.

Dans certains cas, les deux modes de vibrations créés par le résonateur ne sont pas gênants dans la mesure où les deux fréquences de résonances créées diffèrent de la fréquence d'antirésonance donnée à traiter.

Le document FR 2961570 propose un résonateur semi-actif permettant de déplacer manuellement une masse sismique par rapport à une lame pour permettre au résonateur de traiter des phénomènes vibratoires se produisant à diverses fréquences.

Un autre résonateur connu est un résonateur amorti. Le moyen de mobilité d'un tel résonateur amorti présente alors une raideur qui n'est pas prépondérante au regard de l'amortissement généré par ce moyen de mobilité.

Le moyen de mobilité présente par conséquent une raideur et un coefficient d'amortissement qui sont tous deux non négligeables. Par exemple, le moyen de mobilité comporte un premier organe présentant une raideur non négligeable et un deuxième organe présentant un coefficient d'amortissement non négligeable. Le premier organe peut par exemple prendre la forme d'un organe déformable. Le deuxième organe peut être obtenu à partir d'un moyen électromagnétique muni d'une bobine électrique et d'un aimant permanent.

Lorsque la structure porteuse vibre, le résonateur amorti vibre alors en quadrature de phase par rapport à la structure porteuse à traiter et s'oppose ainsi au mouvement de cette structure porteuse.

La masse en tant que telle de la masse sismique est choisie en fonction de la masse de la structure porteuse et de l'amortissement à apporter.

Le moyen de mobilité peut en particulier être réglé pour apporter un amortissement optimal qui permet de minimiser sur une bande de fréquences la réponse de la structure porteuse.

Si l'amortissement apporté est faible, le résonateur amorti se comporte comme un résonateur à raideur prépondérante en faisant apparaitre deux pics de résonance de part et d'autre de la fréquence d'antirésonance traitée. A l'inverse, si l'amortissement apporté est important, le résonateur amorti a un faible impact sur la réponse de la structure. Par contre, lorsque le coefficient d'amortissement du moyen de mobilité est judicieusement choisi, l'amplitude de la vibration traitée à la fréquence de réglage du résonateur est réduite sans pour autant créer deux pics de résonance. Le réglage du résonateur amorti vise alors à faire un compromis entre l'atténuation souhaitée de la vibration à traiter à une fréquence particulière et la présence éventuelle de deux pics de résonance produits de part et d'autre de cette fréquence particulière.

Les performances du résonateur amorti sont proportionnelles à la masse de la masse sismique. En cas de modification d'une structure porteuse d'un aéronef, l'adaptation d'un résonateur amorti peut toutefois être délicate.

En outre, un tel résonateur amorti est utilisé pour filtrer des vibrations se produisant sensiblement à une fréquence donnée.

Or, certains aéronefs peuvent comprendre un rotor principal qui effectue une rotation à une vitesse de consigne susceptible de varier au cours d'un vol. Cette situation complexifie les moyens à mettre en oeuvre pour compenser les instabilités aérodynamiques subies, car pour ces aéronefs il s'agit de diminuer des vibrations « larges bandes » engendrées par la rotation du rotor principal. Un résonateur amorti usuel peut ainsi être moins efficace dans ce contexte.

Un autre type de système comporte un résonateur actif muni d'un actionneur. Ce système consiste à piloter le déplacement de la masse sismique par l'intermédiaire d'un actionneur en fonction de la position de la masse sismique.

Un tel résonateur est par exemple illustré par le document FR 2784350.

Ce résonateur est intéressant. Néanmoins, l'amortissement apporté est limité en raison de son instabilité intrinsèque. Un résonateur est usuellement dit « conditionnellement stable » dans la mesure où le résonateur est stable jusqu'à un certain niveau de sollicitation. Si le résonateur est réglé pour contrecarrer les vibrations exercées sur une structure en utilisant un actionneur et l'amplification dynamique de la masse sismique pour générer un effort important, le fonctionnement du résonateur peut devenir instable et incontrôlable. Dès lors, l'effort exercé par l'actionneur est limité pour rester dans le domaine de stabilité du résonateur.

Un autre résonateur actif comporte un capteur mesurant les vibrations de la structure porteuse équipée de ce résonateur. L'actionneur est alors commandé en fonction des vibrations mesurées.

Les documents US 5620068, FR 2770825, et US 5853144 sont aussi connus.

Le document US 5620068 présente un actionneur utilisé pour exciter un système masse-ressort.

Le document FR 2770825 décrit un système comprenant un résonateur, au moins un capteur mesurant un paramètre représentatif des vibrations présentes dans une cabine, et une unité de commande reliée au résonateur et au capteur.

Le document US 5853144 décrit un hélicoptère muni de moyens pour faire osciller des dispositifs de commande à une fréquence correspondant à une fréquence d'excitation.

Le document EP 2845799 est aussi connu.

Les documents US 2009/020381 et EP 2039957 sont éloignés du domaine de l'invention.

La présente invention a alors pour objet un résonateur innovant.

Selon l'invention, un résonateur destiné à contrer des vibrations d'une structure porteuse est muni d'une masse sismique et d'un support destiné à être fixé à la structure porteuse, le résonateur comprenant un moyen de mobilité reliant la masse sismique au support en autorisant un déplacement oscillant de la masse sismique par rapport au support.

En outre, le moyen de mobilité comporte :

- un premier ensemble électromagnétique comprenant un élément solidaire de la masse sismique et un élément solidaire du support, un desdits éléments comprenant une première bobine électrique et l'autre élément comprenant un premier aimant permanent, la première bobine électrique n'étant pas alimentée électriquement par un courant électrique,

- un actionneur électrique destiné à agir sur un déplacement de la masse sismique par rapport au support, l'actionneur étant relié à une unité de traitement, l'unité de traitement étant configurée pour alimenter électriquement l'actionneur par un courant électrique variable déterminé en fonction d'une part d'un déplacement relatif entre une structure porteuse et ladite masse sismique et d'autre part d'un déplacement individuel d'une structure porteuse,

- un organe élastique interposé entre la masse sismique et le support.

L'expression « déplacement oscillant » signifie que la masse sismique se déplace entre deux positions extrêmales, par exemple selon un mouvement translatif ou un mouvement rotatif.

L'expression « la première bobine électrique n'étant pas alimentée électriquement par un courant électrique » signifie aucune source d'énergie autre que la première bobine n'injecte un courant électrique dans le circuit électrique relié à la première bobine électrique.

L'expression « l'unité de traitement étant configurée pour alimenter électriquement l'actionneur par un courant électrique variable » signifie que l'unité de traitement détermine automatiquement l'intensité et/ou la tension électrique du courant électrique à fournir à l'actionneur, cette intensité et/ou cette tension électrique pouvant varier dans le temps. De plus, l'unité de traitement transmet ce courant électrique à l'actionneur pour requérir un déplacement de la masse sismique.

A l'inverse, la première bobine électrique n'est pas alimentée électriquement.

L'expression « déplacement individuel » représente la distance parcourue par la structure porteuse et le support sous l'effet de vibrations. L'expression « déplacement relatif » représente la distance parcourue par la masse sismique relativement à la structure porteuse et au support durant sous l'effet de vibrations.

Par suite, soit la masse sismique porte la première bobine électrique et le support porte le premier aimant, soit la masse sismique porte le premier aimant et le support porte la première bobine électrique.

Le résonateur est un résonateur amorti actif ayant au moins une bobine électrique.

En effet, l'organe élastique présente un coefficient de raideur non négligeable. En outre, la première bobine électrique permet d'amortir le mouvement de la masse sismique. Enfin, l'actionneur permet d'exercer un effort dynamique sur la masse sismique.

Cet actionneur peut être en appui sur le support et/ou sur la masse sismique et/ou sur l'organe élastique par exemple.

L'introduction de l'actionneur alimenté électriquement par un courant électrique à intensité variable et/ou à tension variable permet d'améliorer les performances d'un résonateur amorti. Le contrôle de l'actionneur permet d'adapter le résonateur aux vibrations subies par une structure en temps réel.

Cette amélioration nécessite une énergie relativement faible pour alimenter électriquement l'actionneur. En outre, le temps de réaction du résonateur peut être minimisé et permettre ainsi à ce résonateur de lutter contre des phénomènes instationnaires.

En outre, le résonateur peut apporter un amortissement optimisé à une structure porteuse subissant des vibrations par rapport à un amortisseur dépourvu d'un actionneur contrôlé en fonction de deux paramètres mesurées.

En effet, l'unité de traitement pilote l'intensité et/ou la tension électrique du courant électrique transmis à l'actionneur en fonction de deux paramètres. Pour régler ce courant électrique, l'unité de traitement introduit notamment un premier gain appliqué par le biais d'une première fonction de transfert au déplacement relatif entre la masse sismique et la structure porteuse, et un deuxième gain appliqué par le biais d'une deuxième fonction de transfert au déplacement individuel de la structure porteuse. Cette solution va à l'inverse des technologies utilisant uniquement une mesure vibratoire effectuée sur la structure porteuse par exemple.

Le premier gain permet de décaler le mode de vibration du résonateur par rapport à la fréquence d'apparition de l'antirésonance à produire. Ce décalage tend à augmenter le domaine de stabilité du résonateur. Le deuxième gain peut alors être maximisé pour optimiser l'amortissement apporté.

Ce résonateur peut de plus comporter une ou plusieurs des caractéristiques qui suivent.

Ainsi, l'actionneur peut comporter un organe piézoélectrique.

Par exemple, l'unité de traitement alimente électriquement un actionneur de type piézoélectrique par un courant électrique à tension variable.

De manière alternative ou complémentaire, l'actionneur peut comporter un deuxième ensemble électromagnétique comprenant un organe solidaire de la masse sismique et un organe solidaire du support, un de ces organes comprenant une deuxième bobine électrique et l'autre organe comprenant un deuxième aimant permanent, la deuxième bobine électrique étant reliée à l'unité de traitement, l'unité de traitement alimentant électriquement la deuxième bobine électrique.

Le résonateur est alors un résonateur amorti actif à double bobines électriques.

Par exemple, l'unité de traitement alimente électriquement un actionneur de type électromagnétique par un courant électrique à intensité variable.

En outre, soit la masse sismique porte la deuxième bobine électrique et le support porte le deuxième aimant, soit la masse sismique porte le deuxième aimant et le support porte la deuxième bobine électrique.

Selon un autre aspect, le résonateur peut comporter un moyen de mesure relié à l'unité de traitement et configuré pour mesurer une information relative au déplacement individuel de la structure porteuse.

A chaque instant de calcul, l'unité de traitement peut régler l'intensité et/ou la tension électrique du courant électrique à fournir à l'actionneur électrique en fonction notamment de la valeur du déplacement individuel.

Ce moyen de mesure peut comprendre un accéléromètre configuré pour mesurer une accélération de la structure porteuse, l'unité de traitement comprenant un intégrateur dit « intégrateur de déplacement individuel » configuré pour intégrer deux fois ladite accélération afin d'obtenir une valeur du déplacement individuel.

Une double intégration de l'accélération mesurée conduit en effet à l'obtention du déplacement individuel.

Selon un autre aspect, le résonateur peut comporter un système de mesure relié à l'unité de traitement et configuré pour mesurer une information relative au déplacement relatif entre une structure porteuse et la masse sismique.

A chaque instant de calcul, l'unité de traitement peut déterminer ainsi l'intensité et/ou la tension électrique du courant électrique à fournir à l'actionneur électrique notamment en fonction de la valeur du déplacement relatif.

Par exemple, le système de mesure comporte un capteur de tension électrique configuré pour mesurer une tension électrique dite « tension mesurée ».

Le capteur de tension électrique peut mesurer cette tension mesurée à deux bornes de la première bobine électrique ou de la deuxième bobine électrique le cas échéant.

Un tel capteur de tension peut être un voltmètre transmettant un signal relatif à la tension mesurée à l'unité de traitement.

Dès lors, l'unité de traitement peut comporter un intégrateur dit « intégrateur de déplacement relatif » pour intégrer un quotient d'une valeur de la tension mesurée divisée par une constante prédéterminée.

Cette constante représente une constante électromagnétique de la bobine électrique servant à la mesure exprimée en Newton par ampère.

En effet, le déplacement relatif $\delta$ est lié à la tension électrique aux bornes de la première bobine électrique ou de la deuxième bobine électrique au travers de la relation suivante :

$$V/T = \dot{\delta}$$

où « V » représente la tension électrique mesurée, « T » représente ladite constante, « $\dot{\delta}$ » représente la dérivée par rapport au temps du déplacement relatif, « / » représente le signe de la division, « = » représente le signe de l'égalité.

Par ailleurs, l'unité de traitement peut comporter un calculateur relié à une source d'énergie électrique alimentant électriquement un amplificateur d'une puissance électrique piloté en intensité électrique et/ou en tension électrique, l'amplificateur étant relié à l'actionneur, le calculateur déterminant une tension électrique d'entrée en fonction du déplacement relatif et du déplacement individuel et ordonnant à la source d'énergie de transmettre un courant électrique présentant ladite tension électrique d'entrée à l'amplificateur.

Un tel amplificateur peut par exemple être un amplificateur de courant.

La source d'énergie électrique peut comprendre une batterie d'accumulateurs ou encore un circuit électrique acheminant un courant électrique. De plus, la source d'énergie comprend un système électronique permettant de régler la tension électrique d'entrée transmise à l'amplificateur, tel qu'un organe ayant une résistance variable.

Le calculateur voire l'intégrateur de déplacement relatif et l'intégrateur de déplacement individuel peuvent représenter des circuits électroniques différents de l'unité de traitement, ou encore peuvent représenter des portions d'un algorithme mémorisé sur une mémoire et exécuté par un processeur.

En effet, l'actionneur est configuré pour fournir une force variable éventuellement électromagnétique selon la relation suivante :

$$f_{CA} = H_1(s) * \dot{\delta} + H_2(s) * X_1$$

où « $f_{CA}$ » représente la force variable, « $H_1(s)$ » représente une première fonction de transfert du second ordre avec un coefficient appelé premier gain prenant la forme d'une constante , « $H_2(s)$ » représente une deuxième fonction de transfert du second ordre avec un coefficient appelé deuxième gain prenant la forme d'une constante, « $\delta$ » représente le déplacement relatif, « $X_1$ » représente le déplacement individuel, « = » représente le signe de l'égalité, « * » représente le signe de la multiplication, et « + » représente le signe de l'addition.

Le premier gain et le deuxième gain sont réglés en fonction de l'application souhaitée.

En fonction du déplacement individuel et du déplacement relatif mesurés, le calculateur détermine alors un paramètre relatif à la tension électrique d'entrée à fournir à l'amplificateur pour que l'actionneur soit alimenté par un courant électrique présentant une intensité et/ou une tension électrique induisant la génération de la force variable $f_{CA}$ requise.

A cet effet, les deux fonctions de transfert fournissant la valeur d'un paramètre relatif à la tension électrique d'entrée en fonction du déplacement individuel et du déplacement relatif peuvent être déterminée par essais ou simulations et mémorisées dans le calculateur. Le calculateur applique alors ces deux fonctions de transfert à chaque pas de calcul pour générer un ordre donné à la source d'énergie pour transmettre le courant électrique adéquat à l'amplificateur. Par exemple, le calculateur transmet un signal à un circuit électrique de la source d'énergie pour régler une valeur de résistance de ce circuit électrique afin de régler la tension électrique d'entrée du courant électrique alimentant l'amplificateur.

Par ailleurs, la masse sismique peut comporter un arbre portant un organe pesant, l'organe pesant formant une saillie de l'arbre.

L'expression « l'organe pesant formant une saillie de l'arbre » signifie que l'organe pesant s'étend à partir de l'arbre selon au moins une direction. L'organe pesant peut alors présenter une épaisseur dans un plan supérieur à une épaisseur de l'arbre dans ce plan.

Par exemple, l'organe pesant présente une masse supérieure à la masse de l'arbre.

Cet arbre s'étendant éventuellement longitudinalement de part et d'autre de l'organe pesant, le premier ensemble électromagnétique et l'actionneur peuvent coopérer avec l'arbre et sont respectivement situés longitudinalement de part et d'autre de l'organe pesant.

L'expression « coopérer avec l'arbre » signifie que la bobine électrique ou l'aimant permanent d'un ensemble électromagnétique est fixé à l'arbre, voire qu'un organe piézoélectrique est relié à cet arbre.

De manière alternative, l'arbre s'étendant éventuellement longitudinalement d'au moins d'un côté de l'organe pesant, le premier ensemble électromagnétique et l'actionneur peuvent coopérer avec l'arbre et sont situés longitudinalement du même côté de l'organe pesant.

Par ailleurs, au moins le premier ensemble électromagnétique ou l'actionneur peut coopérer avec l'organe pesant.

Par ailleurs, l'organe élastique peut comprendre au moins un ressort.

De manière alternative ou complémentaire, l'organe élastique peut comprendre au moins une lame flexible.

Outre un résonateur, l'invention vise un aéronef muni d'une structure porteuse soumise à des vibrations, Cet aéronef comporte alors un résonateur selon l'invention, le support du résonateur étant solidarisé à la structure porteuse.

L'invention vise aussi un procédé pour contrer des vibrations d'une structure porteuse avec un résonateur du type décrit précédemment, ledit procédé comportant une étape d'alimentation électrique dudit actionneur par un courant électrique variable déterminé en fonction d'une part d'un déplacement relatif entre la structure porteuse et ladite masse sismique et d'autre part d'un déplacement individuel de la structure porteuse.

Selon un aspect, ledit actionneur comportant un deuxième ensemble électromagnétique comprenant un organe solidaire de la masse sismique et un organe solidaire du support, un desdits organes comprenant une deuxième bobine électrique et l'autre organe comprenant un deuxième aimant permanent, la deuxième bobine électrique étant reliée à ladite unité de traitement, ledit procédé comporte une étape d'alimentation électrique de la deuxième bobine électrique par l'unité de traitement.

Selon un aspect, pour mesurer ledit déplacement individuel, le procédé comporte une étape de mesure d'une accélération de ladite structure porteuse, et une étape d'intégration durant laquelle ladite accélération est intégrée deux fois afin d'obtenir une valeur dudit déplacement individuel.

Selon un aspect, pour mesurer ledit déplacement relatif, le procédé comporte une étape de mesure d'une tension électrique dite « tension mesurée » par commodité à deux bornes de la première bobine électrique ou à deux bornes d'une deuxième bobine électrique de l'actionneur.

Selon un aspect, le procédé comporte une étape d'intégration d'un quotient d'une valeur de ladite tension mesurée divisée par une constante prédéterminée.

Selon un aspect, une source d'énergie électrique alimentant électriquement un amplificateur d'une puissance électrique pilotée, ledit amplificateur étant relié à l'actionneur, ledit procédé comporte une étape de détermination d'une tension électrique d'entrée en fonction dudit déplacement relatif et dudit déplacement individuel et une étape de génération d'un ordre ordonnant à ladite source d'énergie de transmettre un courant électrique présentant ladite tension électrique d'entrée à l'amplificateur.

L'invention et ses avantages apparaîtront avec plus de détails dans le cadre de la description qui suit avec des exemples donnés à titre illustratif en référence aux figures annexées qui représentent :

- la figure 1, un schéma présentant un aéronef selon l'invention,

- les figures 2 à 5, des schémas présentant un résonateur comprenant un organe élastique à ressort,

- la figure 6, un schéma présentant un résonateur comprenant un organe élastique à lame, et

- la figure 7, un schéma illustrant les performances du résonateur.

Les éléments présents dans plusieurs figures distinctes sont affectés d'une seule et même référence.

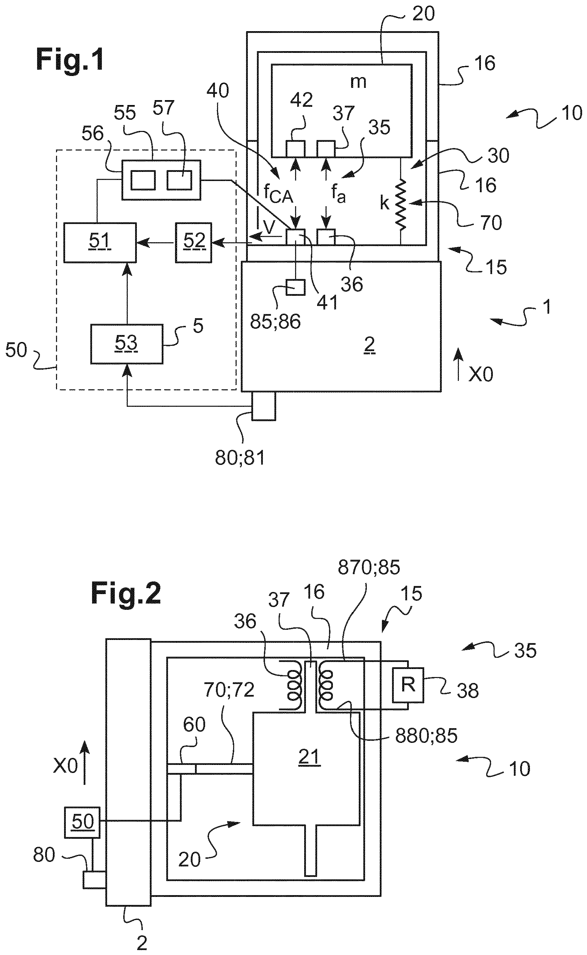

La figure 1 présente un aéronef 1 selon l'invention. Cet aéronef est muni d'une structure dite structure porteuse 2. La structure porteuse 2 est soumise à des vibrations tendant à déplacer la structure porteuse selon une direction X0.

Dès lors, l'aéronef 1 est muni d'un résonateur 10 selon l'invention pour minimiser ces vibrations, du moins à certaines fréquences.

Le résonateur 10 comprend un support 15 solidarisé à la structure porteuse 2 par des moyens usuels non représentés. Par exemple, le support 15 peut être vissé, collé, soudé voire riveté à la structure porteuse.

Ce support 15 peut représenter un carter délimitant un espace interne creux du résonateur 10. Dès lors, le support peut comprendre une seule pièce 16 mécanique, ou plusieurs pièces 16 fixées les unes aux autres.

Par ailleurs, le résonateur 10 est muni d'une masse sismique 20. L'expression « masse sismique » désigne un ensemble mécanique effectuant un mouvement oscillatoire par rapport au support 15. La masse sismique 20 présente une masse m.

Par ailleurs, le résonateur 10 comprend un moyen de mobilité 30 reliant la masse sismique 20 au support 15. Le cas échéant, la masse sismique est disposée dans l'espace interne délimité par le support 15.

Le moyen de mobilité 30 autorise un déplacement oscillant de la masse sismique 20 par rapport au support 15.

Dès lors, le moyen de mobilité 30 comprend un organe élastique 70 présentant une raideur k non négligeable. L'organe élastique 70 est interposé entre la masse sismique 20 et le support 15.

De plus, le moyen de mobilité 30 comprend un premier ensemble électromagnétique 35 interposé entre la masse sismique 20 et le support 15. Ce premier ensemble électromagnétique génère une première force électromagnétique fa et présente un amortissement non négligeable.

A cet effet, le premier ensemble électromagnétique comprend un élément solidaire de la masse sismique 20 et un élément solidaire du support 15. En particulier, un de ces deux éléments comprend une première bobine électrique 36 et l'autre élément comprend un premier aimant permanent 37.

En outre, la première bobine électrique 36 n'est pas alimentée électriquement par un courant électrique. Les bornes 870, 880 de la première bobine électrique 36 sont par exemple reliées à un premier circuit électrique visible sur la figure 2 dépourvu d'une source d'énergie électrique. Ce premier circuit électrique peut comprendre une résistance électrique 38 réglable manuellement par un opérateur avant vol à l'aide d'un potentiomètre. Cet opérateur peut régler la valeur en ohms de la résistance générée par la résistance électrique 38, ayant pour effet de régler manuellement le coefficient d'amortissement induit par la première bobine électrique avant vol.

Dès lors et en référence à la figure 1, la première force électromagnétique fa n'est pas réglable automatiquement lorsque le résonateur est en état de fonctionnement, mais peut être réglée par un opérateur lors de l'installation du résonateur sur la structure porteuse 2. Cette force électromagnétique fa est sinusoïdale si le premier aimant permanent 37 traverse la première bobine électrique 36 selon un mouvement sinusoïdal.

Le moyen de mobilité 30 comprend de plus un actionneur 40 électrique interposé entre la masse sismique 20 et le support 15. Cet actionneur 40 peut présenter un amortissement non négligeable. L'actionneur 40 génère une deuxième force fca qui est variable automatiquement et dynamiquement en fonction de la valeur de deux paramètres.

A cet effet, l'actionneur 40 peut comporter un deuxième ensemble électromagnétique. Le deuxième ensemble électromagnétique comprend un organe solidaire de la masse sismique 20 et un organe solidaire du support 15. Un de ces deux organes comprend une deuxième bobine électrique 41 et l'autre organe comprenant un deuxième aimant permanent 42. La deuxième bobine électrique 41 est reliée à une unité de traitement 50.

Selon la variante de la figure 2, l'actionneur peut comporter un organe piézoélectrique 60 fixé au support. De plus, l'organe piézoélectrique 60 est relié mécaniquement directement ou indirectement à la masse sismique, par exemple indirectement via l'organe élastique 70. L'organe piézoélectrique 60 est en outre relié électriquement à l'unité de traitement 50.

En référence à la figure 1 et quelle que soit la nature de l'actionneur, l'unité de traitement 50 alimente électriquement l'actionneur, à savoir la deuxième bobine électrique 41 ou l'organe piézoélectrique, par un courant électrique présentant une intensité et/ou une tension électrique réglables. L'intensité et la tension électrique sont réglables automatiquement par l'unité de traitement en fonction du déplacement individuel de la structure porteuse ainsi que du déplacement relatif de la structure porteuse et de la masse sismique. Dès lors, la deuxième force fca est réglable automatiquement et sans intervention humaine lorsque le résonateur est en état de fonctionnement.

L'unité de traitement 50 peut comprendre par exemple un processeur, un circuit intégré, un système programmable, un circuit logique, ces exemples ne limitant pas la portée donnée à l'expression « unité de traitement ». L'unité de traitement peut être déportée au regard d'un équipement comprenant le support ainsi qu'un premier ensemble électromagnétique 35 et l'actionneur 40. L'unité de traitement est alors reliée à équipement.

L'unité de traitement 50 peut notamment comprendre un calculateur 51 et/ou un intégrateur de déplacement individuel 53 et/ou un intégrateur de déplacent relatif 52. Ces différents sous-ensembles peuvent par exemple représenter divers circuits électroniques reliés les uns aux autres, ou encore des segments de code d'un algorithme mémorisé.

Pour régler la deuxième force fca, le résonateur 10 peut comporter un moyen de mesure 80. Ce moyen de mesure est relié à l'unité de traitement 50 par une liaison filaire ou non filaire.

Dès lors, le moyen de mesure 80 est configuré pour mesurer une information relative au déplacement individuel d'une structure porteuse 2 selon la direction X0. Le moyen de mesure 80 peut être déporté au regard d'un équipement comprenant le support ainsi qu'un premier ensemble électromagnétique 35 et l'actionneur 40.

Le moyen de mesure 80 peut comprendre un accéléromètre 81 configuré pour mesurer une accélération de la structure porteuse 2. L'unité de traitement 50 comporte alors un intégrateur dit « intégrateur de déplacement individuel 53 » relié à l'accéléromètre 81 et à un calculateur 51. L'accéléromètre 81 transmet un signal représentant l'accélération mesurée à l'intégrateur de déplacement individuel 53. Cet intégrateur de déplacement individuel 53 réalise une double intégrale de l'accélération mesurée sur un intervalle de temps afin d'obtenir une valeur du déplacement individuel de la structure porteuse. La valeur du déplacement individuel est transmise au calculateur 51.

Par ailleurs, le résonateur 10 peut comporter un système de mesure 85 relié à l'unité de traitement 50. Ce système de mesure 85 mesure une information relative au déplacement relatif entre la structure porteuse 2 et la masse sismique 20.

Le système de mesure 85 peut être déporté au regard d'un équipement comprenant le support ainsi qu'un premier ensemble électromagnétique 35 et l'actionneur 40.

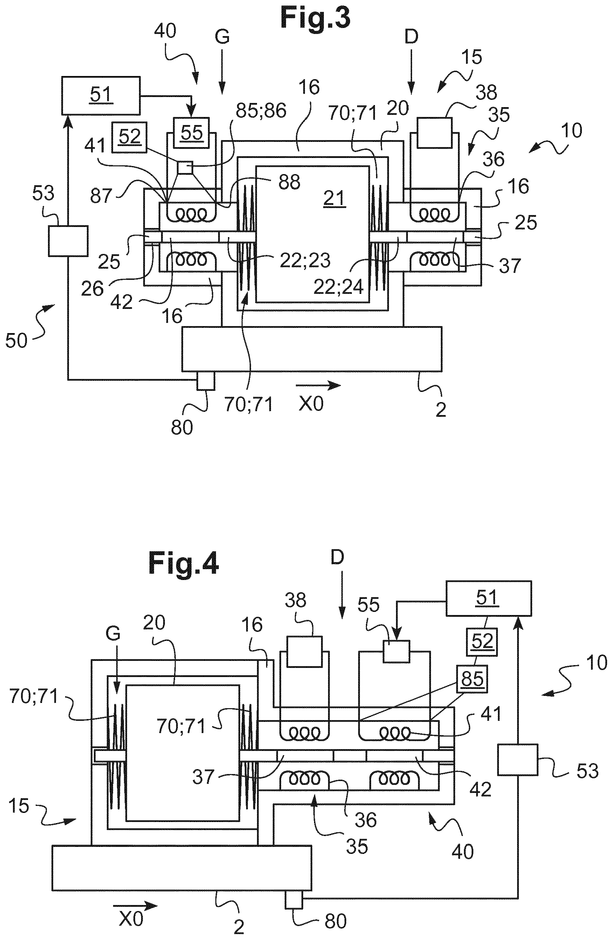

Dès lors, le système de mesure 85 peut comporter un capteur de tension électrique 86 qui mesure une tension électrique dite « tension mesurée » le cas échéant à deux bornes 87, 88 de la deuxième bobine électrique 41 visibles sur la figure 3, ou aux bornes 870, 880 de la premier bobine électrique 36 visibles sur la figure 2.

Par suite et en référence à la figure 1, l'unité de traitement 50 peut comporter un intégrateur dit « intégrateur de déplacement relatif 52 ».

Cet intégrateur de déplacement relatif 52 réalise l'intégration d'un quotient de la tension électrique mesurée V divisée par une constante T. Le déplacement relatif est alors égal au résultat de cette intégration.

Chacun des intégrateurs décrits précédemment peut par exemple prendre la forme d'un circuit électrique usuel, ou encore d'une fonction mathématique mémorisée dans une mémoire de l'unité de traitement et exécutée par un processeur ou équivalent de l'unité de traitement.

Par ailleurs, l'unité de traitement 50 comporte donc un calculateur 51 configuré pour déterminer une valeur de l'intensité et/ou de la tension électrique réglables du courant électrique à fournir à l'actionneur en fonction du déplacement relatif et du déplacement individuel.

Ce calculateur peut comprendre un processeur ou équivalent, une mémoire, une carte d'entrée reliée au moyen de mesure ainsi qu'au système de mesure et au processeur, et une carte de sortie reliée au processeur et à une source d'énergie.

Pour produire un courant électrique présentant l'intensité et/ou la tension électrique requises à atteindre, l'unité de traitement commande un deuxième circuit électrique 55. En particulier, l'unité de traitement contrôle une source d'énergie électrique 56 pour produire un courant électrique présentant une tension électrique d'entrée transmise à un amplificateur 57.

Par exemple, le calculateur applique à chaque pas de calcul un modèle mathématique déterminé par essais ou simulation pour déterminer un paramètre représentatif de la tension électrique d'entrée en fonction de la valeur du déplacement relatif et du déplacement individuel à ce pas de calcul. Un signal est transmis à la source d'énergie 56 pour que le courant électrique requis soit délivré à un amplificateur 57. L'amplificateur 57 produit alors le courant électrique variable requis et transmet ce courant électrique à l'actionneur.

Par suite, l'unité de traitement adapte en permanence et pendant le vol de l'aéronef l'intensité et/ou la tension électrique du courant électrique transmis à l'actionneur en fonction du déplacement de la structure porteuse 2, et du déplacement relatif de la structure porteuse 2 par rapport à la masse sismique 20.

Par ailleurs, selon les exemples de réalisation des figures 3 à 5, l'organe élastique 70 peut comprendre au moins un ressort 71. Par exemple, deux ressorts sont interposés entre la masse sismique 20 et le support 15. En particulier, les deux ressorts peuvent être situés de part et d'autre d'une section de la masse sismique selon une direction de déplacement de la masse sismique.

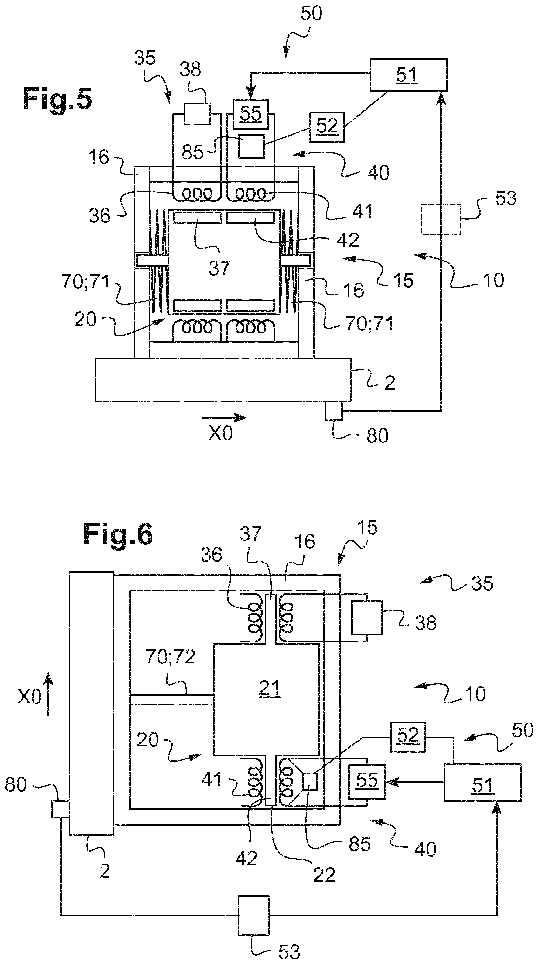

Selon l'exemple de réalisation de la figure 6 et de la figure 2, l'organe élastique 70 peut comprendre au moins une lame élastique 72. La lame élastique 72 s'étend d'une première extrémité fixée au support 15 vers une deuxième extrémité portant la masse sismique 20.

Par ailleurs, et en référence à la figure 3, la masse sismique 20 peut comporter un arbre 22 portant un organe pesant 21. L'organe pesant 21 est en saillie de l'arbre 22.

Cet arbre 22 peut permettre de guider le mouvement de la masse sismique 20.

Toutefois et selon une autre variante, un tel arbre peut être optionnel si des organes élastiques apportant de la raideur permettent le mouvement unidirectionnel de la masse : le guidage peut être alors assuré directement entre la masse sismique 20 et le support 15. Par exemple, les organes élastiques comprennent alors des flasques déformables selon une seule direction.

Selon une variante munie d'un arbre, l'arbre 22 peut aussi permettre de porter un élément du premier ensemble électromagnétique et/ou de porter un organe du deuxième ensemble électromagnétique le cas échéant, voire peut être fixé à un organe piézoélectrique.

Ainsi, l'arbre 22 peut s'étendre selon sa longueur entre deux zones extrémales 25. Au moins une zone extrémale 25 peut être portée par le support 15 au travers d'un palier 26 autorisant une liberté de mouvement à la masse sismique par rapport au support.

En particulier, l'arbre 22 peut traverser de part en part l'organe pesant. Une zone extrémale est alors située d'un côté dit côté gauche G de l'organe pesant 21 sur la figure 3, une autre zone extrémale étant située d'un côté dit côté droit D de l'organe pesant 21. Chaque zone extrémale 25 de l'arbre 22 peut alors être portée par le support selon la figure 3.

Par ailleurs et selon la variante de la figure 3, le premier ensemble électromagnétique 35 et l'actionneur 40 coopèrent avec l'arbre 22 de la masse sismique 20. Le premier ensemble électromagnétique 35 et le deuxième ensemble électromagnétique de l'actionneur 40 sont alors selon cette figure 3 respectivement situés longitudinalement de part et d'autre de l'organe pesant 21.

Par exemple, le premier aimant 37 est porté par la zone extrémale de l'arbre situé du côté droit de l'organe pesant, et le deuxième aimant 42 est porté par la zone extrémale de l'arbre situé du côté gauche de l'organe pesant. La première bobine électrique 36 et la deuxième bobine électrique 41 sont alors portées par le support.

De manière alternative, au moins une bobine électrique est portée par l'arbre 22.

Selon la variante de la figure 4, le premier ensemble électromagnétique 35 et l'actionneur 40 sont situés longitudinalement du même côté D de l'organe pesant 21, à savoir le coté droit selon cet exemple.

Selon la variante de la figure 5, au moins le premier ensemble électromagnétique 35 ou l'actionneur 40 coopère avec l'organe pesant 21.

Par exemple, le premier aimant 37 et le deuxième aimant 42 sont portés par l'organe pesant. La première bobine électrique 36 et la deuxième bobine électrique 41 sont alors portées par le support 15.

De manière alternative, au moins une bobine électrique est portée par l'arbre 22.

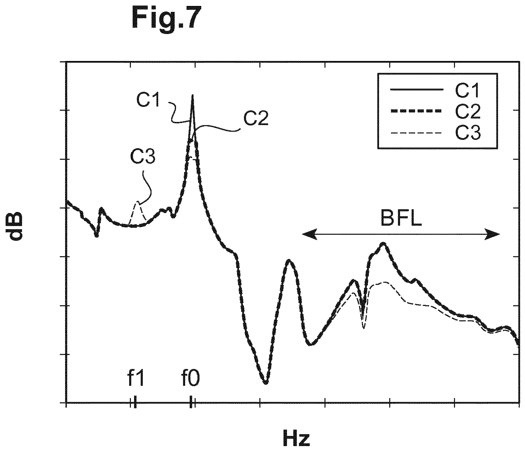

La figure 7 illustre les performances d'un résonateur selon l'invention. Cette figure 7 présente un graphique représentant des fréquences de vibration d'une structure porteuse en abscisse et l'amplitude de la vibration en ordonnée exprimée par exemple en décibels.

La première courbe C1 illustre les vibrations subies sans résonateur.

La deuxième courbe C2 illustre les vibrations subies en appliquant un résonateur amorti usuel.

Enfin la troisième courbe C3 illustre les vibrations subies en appliquant un résonateur selon l'invention.

La première courbe C1 atteint un extremum important à une fréquence f0 autour de laquelle on veut minimiser la réponse de la structure.

Un résonateur amorti usuel réglé sur cette fréquence permet de réduire l'extremum atteint. Toutefois, la deuxième courbe C2 reste confondue avec la courbe C1 pour les autres fréquences.

En référence à la troisième courbe C3, l'amortissement apporté par le résonateur selon l'invention sur le mode de vibration de la structure porteuse à la fréquence de réglage f0 est plus important que l'amortissement apporté par un résonateur amorti usuel à masse sismique égale. Dès lors, la troisième courbe C3 se trouve sous la deuxième courbe C2 à la fréquence de réglage f0. En effet, le mode de vibration produit par la deuxième bobine électrique est décalé à une fréquence f1 cette dernière qui est réglable via un premier gain intervenant dans la première fonction de transfert H1(s), au lieu de la fréquence f0 en raison du contrôle de l'actionneur en fonction notamment du déplacement relatif de la structure porteuse par rapport à la masse sismique. Dès lors, le résonateur présente une stabilité de contrôle optimisée permettant d'introduire des gains importants pour optimiser l'amortissement apporté à la fréquence f0 par rapport à un résonateur actif réglé à la fréquence proche de f0.

De plus, l'actionneur permet de réduire les vibrations sur une large bande de fréquences BFL, contrairement à un résonateur amorti usuel accordé sur la fréquence du mode de vibration à contrôler.

Par ailleurs, le résonateur est relativement sûr. En effet, si la procédure de contrôle de la deuxième bobine électrique 41 est défaillant, le résonateur atteindra a minima les performances illustrées par la deuxième courbe C2.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Les variantes des figures 3 à 6 peuvent par exemple comprendre un actionneur piézoélectrique au lieu d'un deuxième ensemble électromagnétique.

**Revendications**

1. Résonateur (10) destiné à contrer des vibrations d'une structure porteuse (2), ledit résonateur étant muni d'une masse sismique (20) et d'un support (15) destiné à être fixé à la structure porteuse (2), le résonateur (10) comprenant un moyen de mobilité (30) reliant la masse sismique (20) au support (15) en autorisant un déplacement oscillant de la masse sismique (20) par rapport au support (15), **caractérisé en ce que** ledit moyen de mobilité (30) comporte :

   - un premier ensemble électromagnétique (35) comprenant un élément solidaire de la masse sismique (20) et un élément solidaire du support (15), un desdits éléments comprenant une première bobine électrique (36) et l'autre élément comprenant un premier aimant permanent (37), la première bobine électrique (36) n'étant pas alimentée électriquement,
- un actionneur (40) électrique destiné à agir sur un déplacement de la masse sismique par rapport au support, ledit actionneur étant relié à une unité de traitement (50), l'unité de traitement (50) étant configurée pour alimenter électriquement l'actionneur par un courant électrique variable déterminé en fonction d'une part d'un déplacement relatif entre la structure porteuse (2) et ladite masse sismique (20) et d'autre part d'un déplacement individuel de la structure porteuse (2),
- un organe élastique (70) interposé entre ladite masse sismique (20) et ledit support (15).

2. Résonateur selon la revendication 1, **caractérisé en ce que** ledit actionneur comporte un organe piézoélectrique fixé au support.

3. Résonateur selon la revendication 1, **caractérisé en ce que** ledit actionneur (40) comporte un deuxième ensemble électromagnétique comprenant un organe solidaire de la masse sismique (20) et un organe solidaire du support (15), un desdits organes comprenant une deuxième bobine électrique (41) et l'autre organe comprenant un deuxième aimant permanent (42), la deuxième bobine électrique (41) étant reliée à ladite unité de traitement (50), l'unité de traitement (50) alimentant électriquement la deuxième bobine électrique (41).

4. Résonateur selon l'une quelconque des revendications 1 à 3, **caractérisé en ce que** ledit résonateur (10) comporte un moyen de mesure (80) relié à l'unité de traitement (50) et configuré pour mesurer une information relative au déplacement individuel.

5. Résonateur selon la revendication 4, **caractérisé en ce que** ledit moyen de mesure (80) comprend un accéléromètre (81) configuré pour mesurer une accélération de ladite structure porteuse (2), ladite unité de traitement (50) comprenant un intégrateur dit « intégrateur de déplacement individuel (53) » configuré pour intégrer deux fois ladite accélération afin d'obtenir une valeur dudit déplacement individuel.

6. Résonateur selon l'une quelconque des revendications 1 à 5, **caractérisé en ce que** ledit résonateur (10) comporte un système de mesure (85) relié à l'unité de traitement (50) et configuré pour mesurer une information relative au déplacement relatif.

7. Résonateur selon la revendication 6, **caractérisé en ce que** ledit système de mesure (85) comporte un capteur de tension (86) configuré pour mesurer une tension électrique à deux bornes (870, 880) de la première bobine électrique dite « tension mesurée ».

8. Résonateur selon la revendication 6, **caractérisé en ce que** ledit système de mesure (85) comporte un capteur de tension (86) configuré pour mesurer une tension électrique à deux bornes (87, 88) d'une deuxième bobine électrique de l'actionneur dite « tension mesurée ».

9. Résonateur selon l'une quelconque des revendications 7 à 8, **caractérisé en ce que** ladite unité de traitement (50) comporte un intégrateur dit « intégrateur de déplacement relatif (52) » pour intégrer un quotient d'une valeur de ladite tension mesurée divisée par une constante prédéterminée.

10. Résonateur selon l'une quelconque des revendications 1 à 9, **caractérisé en ce que** ladite unité de traitement (50) comporte un calculateur (51) relié à une source d'énergie électrique alimentant électriquement un amplificateur d'une puissance électrique pilotée, ledit amplificateur étant relié à l'actionneur, ledit calculateur déterminant une tension électrique d'entrée en fonction dudit déplacement relatif et dudit déplacement individuel et ordonnant à ladite source d'énergie de transmettre un courant électrique présentant ladite tension électrique d'entrée à l'amplificateur.

11. Résonateur selon l'une quelconque des revendications 1 à 10, **caractérisé en ce que** ladite masse sismique (20) comporte un arbre (22) portant un organe pesant (21), ledit organe pesant (21) formant une saillie dudit arbre (22).

12. Résonateur selon la revendication 11, **caractérisé en ce que** ledit arbre (22) s'étendant longitudinalement de part et d'autre de l'organe pesant (21), le premier ensemble électromagnétique (35) et l'actionneur coopèrent avec ledit arbre (22) et sont respectivement situés longitudinalement de part et d'autre de l'organe pesant (21).

13. Résonateur selon la revendication 11, **caractérisé en ce que** ledit arbre (22) s'étendant longitudinalement d'au moins d'un côté (G, D) de l'organe pesant (21), le premier ensemble électromagnétique (35) et l'actionneur coopèrent avec ledit arbre (22) et sont situés longitudinalement du même côté (D) de l'organe pesant (21).

14. Résonateur selon la revendication 1, **caractérisé en ce qu'**au moins le premier ensemble électromagnétique (35) ou l'actionneur coopère avec l'organe pesant (21).

15. Résonateur selon l'une quelconque des revendications 1 à 14, **caractérisé en ce que** ledit organe élastique (70) peut comprendre au moins un ressort (71).

16. Résonateur selon l'une quelconque des revendications 1 à 15, **caractérisé en ce que** ledit organe élastique (70) peut comprendre au moins une lame flexible (72).

17. Aéronef (1) muni d'une structure porteuse (2) soumise à des vibrations, **caractérisé en ce que** ledit aéronef comporte un résonateur (10) selon l'une quelconque des revendications 1 à 16, ledit support (15) étant solidarisé à ladite structure porteuse (2).

18. Procédé pour contrer des vibrations d'une structure porteuse avec un résonateur selon la revendication 1, ledit procédé comportant une étape d'alimentation électrique dudit actionneur par un courant électrique variable déterminé en fonction d'une part du déplacement relatif entre la structure porteuse (2) et ladite masse sismique (20) et d'autre part du déplacement individuel de la structure porteuse (2).

19. Procédé selon la revendication 18, **caractérisé en ce que** ledit actionneur (40) comportant un deuxième ensemble électromagnétique comprenant un organe solidaire de la masse sismique (20) et un organe solidaire du support (15), un desdits organes comprenant une deuxième bobine électrique (41) et l'autre organe comprenant un deuxième aimant permanent (42), la deuxième bobine électrique (41) étant reliée à ladite unité de traitement (50), ledit procédé comporte une étape d'alimentation électrique de la deuxième bobine électrique (41) par l'unité de traitement (50).

20. Procédé selon l'une quelconque des revendications 18 à 19, **caractérisé en ce que** pour mesurer ledit déplacement individuel, le procédé comporte une étape de mesure d'une accélération de ladite structure porteuse (2), et une étape d'intégration durant laquelle ladite accélération est intégrée deux fois afin d'obtenir une valeur dudit déplacement individuel.

21. Procédé selon l'une quelconque des revendications 18 à 20,

**caractérisé en ce que** pour mesurer ledit déplacement relatif, le procédé comporte une étape de mesure d'une tension électrique dite « tension mesurée » à deux bornes (870, 880) de la première bobine électrique ou à deux bornes (87, 88) d'une deuxième bobine électrique de l'actionneur.

22. Procédé selon la revendication 21, **caractérisé en ce que** le procédé comporte une étape d'intégration d'un quotient d'une valeur de ladite tension mesurée divisée par une constante prédéterminée.

23. Procédé selon l'une quelconque des revendications 18 à 22,

**caractérisé en ce qu'**une source d'énergie électrique alimentant électriquement un amplificateur d'une puissance électrique pilotée, ledit amplificateur étant relié à l'actionneur, ledit procédé comporte une étape de détermination d'une tension électrique d'entrée en fonction dudit déplacement relatif et dudit déplacement individuel et une étape de génération d'un ordre ordonnant à ladite source d'énergie de transmettre un courant électrique présentant ladite tension électrique d'entrée à l'amplificateur.

## Patentansprüche

1. Resonator (10), der dazu bestimmt ist, Schwingungen einer Tragstruktur (2) zu begegnen, wobei der Resonator mit einer seismischen Masse (20) und einem Träger (15), der dazu bestimmt ist, an der Tragstruktur (2) befestigt zu sein, versehen ist, wobei der Resonator (10) ein Mobilitätsmittel (30) umfasst, das die seismische Masse (20) mit dem Träger (15) unter Erlauben einer oszillierenden Verlagerung der seismischen Masse (20) in Bezug auf den Träger (15) verbindet,

   **dadurch gekennzeichnet, dass** das Mobilitätsmittel (30) Folgendes umfasst:

   - eine erste elektromagnetische Baugruppe (35), die ein Element umfasst, das fest mit der seismischen Masse (20) verbunden ist, und ein Element, das fest mit dem Träger (15) verbunden ist, wobei eines der Elemente eine erste elektrische Spule (36) umfasst, und das andere Element einen ersten Dauermagnet (37) umfasst, wobei die erste elektrische Spule (36) elektrisch nicht versorgt ist,
   - einen elektrischen Aktuator (40), der dazu bestimmt ist, auf eine Verlagerung der seismischen Masse in Bezug zu dem Träger einzuwirken, wobei der Aktuator mit einer Verarbeitungseinheit (50) verbunden ist, wobei die Verarbeitungseinheit (50) konfiguriert ist, um den Aktuator elektrisch mit einem variablen elektrischen Strom zu versorgen, der in Abhängigkeit einerseits von einer relativen Verlagerung zwischen der Tragstruktur (2) und der seismischen Masse (20) und andererseits einer individuellen Verlagerung der Tragstruktur (2) bestimmt ist,
- ein elastisches Organ (70), das zwischen die seismische Masse (20) und den Träger (15) eingefügt ist.

2. Resonator nach Anspruch 1,
**dadurch gekennzeichnet, dass** der Aktuator ein piezoelektrisches Organ, das an dem Träger befestigt ist, umfasst.

3. Resonator nach Anspruch 1,
**dadurch gekennzeichnet, dass** der Aktuator (40) eine zweite elektromagnetische Baugruppe umfasst, die ein Organ umfasst, das fest mit dem seismischen Masse (20) verbunden ist, und ein Organ, das fest mit dem Träger (15) verbunden ist, wobei eines der Organe eine zweite elektrische Spule (41) umfasst, und das andere Organ einen zweiten Dauermagnet (42) umfasst, wobei die zweite elektrische Spule (41) mit der Verarbeitungseinheit (50) verbunden ist, wobei die Verarbeitungseinheit (50) die zweite elektrische Spule (41) elektrisch versorgt.

4. Resonator nach einem der Ansprüche 1 bis 3,
**dadurch gekennzeichnet, dass** der Resonator (10) ein Messmittel (80) umfasst, das mit der Verarbeitungseinheit (50) verbunden und konfiguriert ist, um eine Information in Zusammenhang mit der individuellen Verlagerung zu messen.

5. Resonator nach Anspruch 4,
**dadurch gekennzeichnet, dass** das Messmittel (80) einen Beschleunigungsmesser (81) umfasst, der konfiguriert ist, um eine Beschleunigung der Tragstruktur (2) zu messen, wobei die Verarbeitungseinheit (50) einen Integrator, der "Integrator individueller Verlagerung" (53) genannt wird, umfasst, der konfiguriert ist, um die Beschleunigung zweimal zu integrieren, um einen Wert der individuellen Verlagerung zu erhalten.

6. Resonator nach einem der Ansprüche 1 bis 5,
**dadurch gekennzeichnet, dass** der Resonator (10) ein Messsystem (85) umfasst, das mit der Verarbeitungseinheit (50) verbunden und konfiguriert ist, um eine Information in Zusammenhang mit relativer Verlagerung zu messen.

7. Resonator nach Anspruch 6,
**dadurch gekennzeichnet, dass** das Messsystem (85) einen Spannungssensor (86) umfasst, der konfiguriert ist, um eine elektrische Spannung, die "Messspannung" genannt wird, an zwei Klemmen (870, 880) der ersten elektrischen Spule zu messen.

8. Resonator nach Anspruch 6,
**dadurch gekennzeichnet, dass** das Messsystem (85) einen Spannungssensor (86) umfasst, der konfiguriert ist, um eine elektrische Spannung, die "Messspannung" genannt wird, an zwei Klemmen (87, 88) einer zweiten elektrischen Spule des Aktuators zu messen.

9. Resonator nach einem der Ansprüche 7 bis 8,
**dadurch gekennzeichnet, dass** die Verarbeitungseinheit (50) einen Integrator umfasst, der "Integrator relativer Verlagerung" (52) genannt wird, um einen Quotienten eines Werts der Messspannung geteilt durch eine vorbestimmte Konstante zu integrieren.

10. Resonator nach einem der Ansprüche 1 bis 9,
**dadurch gekennzeichnet, dass** die Verarbeitungseinheit (50) einen Rechner (51) umfasst, der mit einer Stromquelle verbunden ist, die einen gesteuerten elektrischen Leistungsverstärker elektrisch versorgt, wobei der Verstärker mit dem Aktuator verbunden ist, wobei der Rechner eine elektrische Eingangsspannung in Abhängigkeit von der relativen Verlagerung und der individuellen Verlagerung bestimmt und die Stromquelle anweist, dem Verstärker einen elektrischen Strom, der die elektrische Eingangsspannung aufweist, zu übertragen.

11. Resonator nach einem der Ansprüche 1 bis 10,
**dadurch gekennzeichnet, dass** die seismische Masse (20) eine Welle (22) umfasst, die ein Wiegeorgan (21) trägt, wobei das Wiegeorgan (21) einen Vorsprung von der Welle (22) bildet.

12. Resonator nach Anspruch 11,
**dadurch gekennzeichnet, dass** sich die Welle (22) längs zu beiden Seiten des Wiegeorgans (21) erstreckt, wobei die erste elektromagnetische Baugruppe (35) und der Aktuator mit der Welle (22) zusammenwirken und jeweils längs zu beiden Seiten des Wiegeorgans (21) liegen.

13. Resonator nach Anspruch 11,
**dadurch gekennzeichnet, dass** sich die Welle (22) längs an mindestens einer Seite (G, D) des Wiegeorgans (21) erstreckt, wobei die erste elektromagnetische Baugruppe (35) und der Aktuator mit der Welle (22) zusammenwirken und längs auf derselben Seite (D) des Wiegeorgans (21) liegen.

14. Resonator nach Anspruch 1,
**dadurch gekennzeichnet, dass** mindestens die erste elektromagnetische Baugruppe (35) oder der Aktuator mit dem Wiegeorgan (21) zusammenwirkt.

15. Resonator nach einem der Ansprüche 1 bis 14,
**dadurch gekennzeichnet, dass** das elastische Organ (70) mindestens eine Feder (71) umfassen kann.

**16.** Resonator nach einem der Ansprüche 1 bis 15, **dadurch gekennzeichnet, dass** das elastische Organ (70) mindestens eine biegsame Klinge (72) umfassen kann.

**17.** Luftfahrzeug (1), das mit einer Tragstruktur (2), die Schwingungen unterliegt, versehen ist, **dadurch gekennzeichnet, dass** das Luftfahrzeug einen Resonator (10) nach einem der Ansprüche 1 bis 16 umfasst, wobei der Träger (15) fest mit der Tragstruktur (2) verbunden ist.

**18.** Verfahren, um Schwingungen einer Tragstruktur mit einem Resonator nach Anspruch 1 zu begegnen, wobei das Verfahren einen Schritt des Versorgens mit Strom des Aktuators durch einen variablen elektrischen Strom umfasst, der in Abhängigkeit einerseits von der relativen Verlagerung zwischen der Tragstruktur (2) und der seismischen Masse (20), und andererseits der individuellen Verlagerung der Tragstruktur (2) bestimmt wird.

**19.** Verfahren nach Anspruch 18, **dadurch gekennzeichnet, dass** der Aktuator (40) eine zweite elektromagnetische Baugruppe umfasst, die ein Organ umfasst, das fest mit der seismischen Masse (20) verbunden ist, und ein Organ, das fest mit dem Träger (15) verbunden ist, wobei eines der Organe eine zweite elektrische Spule (41) umfasst, und das andere Organ einen zweiten Dauermagnet (42) umfasst, wobei die zweite elektrische Spule (41) mit der Verarbeitungseinheit (50) verbunden ist, wobei das Verfahren einen Schritt der Versorgung mit Strom der zweiten elektrischen Spule (41) durch die Verarbeitungseinheit (50) umfasst.

**20.** Verfahren nach einem der Ansprüche 18 bis 19, **dadurch gekennzeichnet, dass** das Verfahren zum Messen der individuellen Verlagerung einen Messschritt einer Beschleunigung der Tragstruktur (2) umfasst, und einen Schritt der Integration, während dem die Beschleunigung zweimal integriert wird, um einen Wert der individuellen Verlagerung zu erhalten.

**21.** Verfahren nach einem der Ansprüche 18 bis 20, **dadurch gekennzeichnet, dass** das Verfahren zum Messen der relativen Verlagerung einen Messschritt einer Stromspannung, die "Messspannung" genannt wird, an zwei Klemmen (870, 880) der ersten elektrischen Spule oder an zwei Klemmen (87, 88) einer zweiten elektrischen Spule des Aktuators umfasst.

**22.** Verfahren nach Anspruch 21, **dadurch gekennzeichnet, dass** das Verfahren einen Integrationsschritt eines Quotienten eines Werts der Messspannung geteilt durch eine vorbestimmte Konstante umfasst.

**23.** Verfahren nach einem der Ansprüche 18 bis 22, **dadurch gekennzeichnet, dass**, da eine Stromquelle einen Verstärker mit einer gesteuerten elektrischen Leistung elektrisch versorgt, wobei der Verstärker mit dem Aktuator verbunden ist, das Verfahren einen Schritt des Bestimmens einer elektrischen Eingangsspannung in Abhängigkeit von der relativen Verlagerung und der individuellen Verlagerung sowie einen Schritt des Erzeugens eines Befehls umfasst, der die Stromquelle anweist, dem Verstärker einen elektrischen Strom, der die elektrische Eingangsspannung aufweist, zu übertragen.

**Claims**

**1.** Resonator (10) intended for counteracting vibrations of a bearing structure (2), said resonator being provided with a seismic mass (20) and a support (15) intended to be fastened to the bearing structure (2), the resonator (10) including at least one movement means (30) connecting the seismic mass (20) to the support (15) while allowing an oscillating movement of the seismic mass (20) relative to the support (15), **characterised in that** said movement means (30) comprises:

- a first electromagnetic assembly (35) including an element that is rigidly connected to the seismic mass (20) and an element that is rigidly connected to the support (15), one of said elements including a first electric coil (36) and the other element including a first permanent magnet (37), the first electric coil (36) not being electrically powered,
- an electric actuator (40) intended to control a movement of the seismic mass relative to the support, said actuator being connected to a processing unit (50), the processing unit (50) being configured to electrically power the actuator with a variable electric current determined on the basis of a relative movement between the bearing structure (2) and the seismic mass (20) and on the basis of an individual movement of the bearing structure (2),
- a resilient member (70) positioned between said seismic mass (20) and said support (15).

**2.** Resonator according to claim 1, **characterised in that** said actuator comprises a piezoelectric member fastened to the support.

**3.** Resonator according to claim 1, **characterised in that** said actuator (40) comprises a second electromagnetic assembly including a member that is rigidly connected to the seismic mass (20) and a member that is rigidly connected to the support (15), one of said members including a second electric coil (41) and the other member including a second permanent magnet (42), the second electric coil (41) being connected to said processing unit (50), the processing unit (50) electrically powering the second electric coil (41).

4. Resonator according to any of claims 1 to 3, **characterised in that** said resonator (10) comprises a measurement means (80) connected to said processing unit (50) and configured to measure information regarding the individual movement.

5. Resonator according to claim 4, **characterised in that** said measurement means (80) includes an accelerometer (81) configured to measure an acceleration of said bearing structure (2), said processing unit (50) including an integrator referred to as an "individual-movement integrator (53)" and configured to integrate said acceleration twice in order to obtain a value of said individual movement.

6. Resonator according to any of claims 1 to 5, **characterised in that** said resonator (10) comprises a measurement system (85) connected to said processing unit (50) and configured to measure information regarding the relative movement.

7. Resonator according to claim 6, **characterised in that** said measurement system (85) comprises a voltage sensor (86) configured to measure an electric voltage at two terminals (870, 880) of the first electric coil, referred to as "measured voltage".

8. Resonator according to claim 6, **characterised in that** said measurement system (85) comprises a voltage sensor (86) configured to measure an electric voltage at two terminals (87, 88) of a second electric coil of the actuator, referred to as "measured voltage".

9. Resonator according either claim 7 or claim 8, **characterised in that** said processing unit (50) comprises an integrator referred to as a "relative-movement integrator (52)" in order to integrate a quotient of a value of said measured voltage divided by a predetermined constant.

10. Resonator according to any of claims 1 to 9, **characterised in that** said processing unit (50) comprises a computing means (51) connected to an electrical power source which electrically powers an amplifier having a controlled electrical power, said amplifier being connected to the actuator, said computing means determining an input electric voltage on the basis of said relative movement and said individual movement, and instructing said power source to transmit an electric current having said input electric voltage to the amplifier.

11. Resonator according to any of claims 1 to 10, **characterised in that** said seismic mass (20) comprises a shaft (22) bearing a weight member (21), said weight member (21) forming a projection of said shaft (22).

12. Resonator according to claim 11, **characterised in that**, said shaft (22) extending longitudinally on either side of the weight member (21), the first electromagnetic assembly (35) and the actuator interact with said shaft (22) and are positioned longitudinally either side of the weight member (21).

13. Resonator according to claim 11, **characterised in that**, said shaft (22) extending longitudinally from at least one side (G, D) of the weight member (21), the first electromagnetic assembly (35) and the actuator interact with said shaft (22) and are positioned longitudinally on the same side (D) of the weight member (21).

14. Resonator according to claim 1, **characterised in that** at least the first electromagnetic assembly (35) or the actuator interacts with the weight member (21).

15. Resonator according to any of claims 1 to 14, **characterised in that** said resilient member (70) can include at least one spring (71).

16. Resonator according to any of claims 1 to 15, **characterised in that** said resilient member (70) can include at least one flexible blade (72).

17. Aircraft (1) provided with a bearing structure (2) which is subject to vibrations, **characterised in that** said aircraft comprises a resonator (10) according to any of claims 1 to 16, said support (15) being rigidly connected to said bearing structure (2).

18. Method for counteracting vibrations of a bearing structure using a resonator according to claim 1, said method comprising a step of electrically powering said actuator with a variable electric current determined on the basis of a relative movement between the bearing structure (2) and said seismic mass (20) and on the basis of an individual movement of the bearing structure (2).

19. Method according to claim 18, **characterised in that** said actuator (40) comprises a second electromagnetic assembly including a member that is rigidly connected to the seismic mass (20) and a member that is rigidly connected to the support (15), one of said members including a second electric coil (41) and the other member including a second permanent magnet (42), the second electric coil (41) being connected to said processing unit (50), said method comprising a step of electrically powering the second electric coil (41) by the processing unit (50).

20. Method according to either claim 18 or claim 19, **characterised in that**, in order to measure said individual movement, the method comprises a step of measuring an acceleration of said bearing structure (2), and an integration step during which said acceleration is integrated twice in order to obtain a value of said individual movement.

21. Method according to any of claims 18 to 20, **characterised in that**, in order to measure said relative movement, the method comprises a step of measuring an electric voltage, referred to as "measured voltage", at two terminals (870, 880) of the first electric coil or at two terminals (87, 88) of a second electric coil of the actuator.

22. Method according to claim 21, **characterised in that** the method comprises a step of integrating a quotient of a value of said measured voltage divided by a predetermined constant.

23. Method according to any of claims 18 to 22, **characterised in that**, an electric power source electrically powering an amplifier having a controlled electric power, and said amplifier being connected to the actuator, said method comprises a step of determining an input electric voltage on the basis of said relative movement and said individual movement, and a step of generating a command instructing said power source to transmit an electric current having said input electric voltage to the amplifier.

Fig.1

Fig.2

EP 3 252 339 B1

# Fig.3

# Fig.4

Fig.5

Fig.6

Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2961570
- FR 2784350
- US 5620068 A
- FR 2770825
- US 5853144 A
- EP 2845799 A
- US 2009020381 A
- EP 2039957 A